# EUROPÄISCHE PATENTANMELDUNG

(11) **EP 4 576 856 A1**
(43) Veröffentlichungstag der Anmeldung: **25.06.2025**
(21) Anmeldenummer: 23219881.2
(22) Anmeldetag: 22.12.2023
(51) Int. Cl.: H04W 12/30, H04L 12/28, H04W 12/55, H04W 12/00

(54) **VERFAHREN ZUM DURCHFÜHREN EINES GERÄTE-ONBOARDING-PROZESSES GESTÜTZT AUF BASIS SYMMETRISCHER KRYPTOGRAPHIE BEI EINEM GERÄT, COMPUTERPROGRAMMPRODUKT, COMPUTERLESBARES SPEICHERMEDIUM SOWIE ONBOARDING-SYSTEM**

(71) Anmelder: Siemens Aktiengesellschaft, 80333 München (DE)
(72) Erfinder: Fischer, Kai, 85598 Baldham (DE); Piccoli, Alessandro, 80333 München (DE); Safieh, Malek, 81539 München (DE)
(74) Vertreter: Siemens Patent Attorneys

(57) **Zusammenfassung**

Die Erfindung betrifft ein Verfahren zum Durchführen eines Geräte-Onboarding-Prozesses geschützt auf Basis symmetrischer Kryptographie, mit den Schritten: Bereitstellen des Geräts (38) mit einem symmetrischen geräteindividuellen Onboarding-Schlüssel; Empfangen einer mit dem Onboarding-Schlüssel geschützten Onboarding-Anfrage mittels einer elektronischen Recheneinrichtung (40), wobei die elektronische Recheneinrichtung (40) einem Nutzer zugeordnet ist, bei welchem das Gerät (38) angemeldet werden soll; Übermitteln der Onboarding-Anfrage von der elektronischen Recheneinrichtung (40) an eine weitere elektronische Recheneinrichtung (42), wobei die weitere elektronische Recheneinrichtung (42) einem Onboarding-Dienstleister für das Gerät (38) zugeordnet ist; Verifizieren des Geräts (38) auf Basis der übermittelten Onboarding-Anfrage; Erzeugen einer Onboarding-Antwort in Abhängigkeit von der Verifizierung und Übertragen der Onboarding-Antwort an die elektronische Recheneinrichtung (40); und Durchführen des Geräte-Onboarding-Prozesses auf Basis der Onboarding-Antwort, wobei zwischen der elektronischen Recheneinrichtung (40) und dem Gerät (38) ein geschützter Kommunikationskanal auf Basis eines symmetrischen Geheimnisses aufgebaut wird. Ferner betrifft die Erfindung ein Computerprogrammprodukt, ein computerlesbares Speichermedium sowie ein Onboarding-System (36).

## Beschreibung

Die nachfolgende Erfindung betrifft ein Verfahren zum Durchführen eines Geräte-Onboarding-Prozesses geschützt auf Basis symmetrischer Kryptographie bei einem Gerät mittels eines Onboarding-Systems gemäß dem geltenden Patentanspruch 1. Ferner betrifft die Erfindung ein Computerprogrammprodukt, ein computerlesbares Speichermedium sowie ein Onboarding-System.

Die Sicherheit in industriellen Geräten mit eingeschränkten Ressourcen, insbesondere sogenannte eingebettete Geräte (Embedded Devices), beispielsweise Internet of things-Geräte (IoT), wird immer weiter untersucht und verbessert. Moderne industrielle Geräte werden immer mehr mit größeren und sicherheitskritischen Netzwerken vernetzt. Demzufolge werden Kommunikationsprotokolle für solche Geräte ständig entwickelt, welche zur Erhöhung der Sicherheit der Geräte und somit des gesamten Netzwerks dienen.

Ein wichtiger Prozess für industrielle Geräte ist das sogenannte Zero-Touch-Device-Onboarding, um ein initiales Security-Onboarding automatisiert durchführen zu können. Es existieren hierzu zahlreiche Protokolle für die Automatisierung eines solchen Prozesses. Dabei werden Credentials (Anmeldeinformationen), beispielsweise Public-Key Zertifikate/private Schlüssel, und Konfigurationseinstellungen auf einem industriellen Gerät installiert, ohne dass ein Service-Techniker eingreifen muss, was auch als Zero-Touch bezeichnet werden kann. Ein solches Onboarding wird teilweise auch als "Provisioning" oder "Bootstrapping" bezeichnet. Der Onboarding-Prozess benötigt ausreichend starke Sicherheitseigenschaften, damit die richtigen Geräte in der neuen Domäne vertrauenswürdig zum Einsatz kommen. Der Onboarding-Prozess erfolgt beispielsweise zwischen drei Parteien. Eine erste Partei bildet dabei ein industrielles Gerät, bei dem Credentials und Konfigurationseinstellungen eines Betreibers installiert werden sollen. Eine zweite Partei bildet eine sogenannte Domain-Registrar, der Käufer und Betreiber des industriellen Gerätes, der Credentials sowie Konfigurationseinstellungen für das Gerät erstellt. Eine dritte Partei ist durch den sogenannten Vendor-Service gebildet, der vom Hersteller zur Verfügung gestellt wird und dem Gerät Informationen über die Endkundendomäne vertrauenswürdig bereitstellen kann.

Ein industrielles Gerät, das noch kein Onboarding durchgeführt hat, verbindet sich bei vorhandener Netzwerkkonnektivität mit dem Domainregistrar, gegebenenfalls nach einer sogenannten Discoveryprozedur, um die Netzwerkadresse des jeweiligen Domainregistrars zu ermitteln. Der Domainregistrar verbindet sich wiederum mit dem industriellen Gerät zugeordneten Vendor-Servicepunkt. Sollte die Originalität des Geräts erfolgreich verifiziert werden, dann erstellt der Domainregistrar Credentials und Konfigurationseinstellungen für das Gerät, das diese schließlich lokal installiert, und zwar bestenfalls unter Rückruf auf seine Vertrauensbeziehung zum Vendor-Servicepunkt. Damit ist der Onboarding-Prozess erfolgreich beendet.

Aktuell erfolgen derartige automatisierte Onboarding-Protokolle auf Basis kryptographisch gesicherter Verbindungen, zum Beispiel TLS, oder objektgebundene Sicherheit, wobei die Vertraulichkeit, die Integrität von Daten und die Authentizität der in der Kommunikation involvierten Parteien sichergestellt wird. Solche Eigenschaften werden mit Hilfe asymmetrischer Kryptographie erreicht.

Asymmetrische Kryptographie bietet die Möglichkeit der Verwendung der digitalen Signaturen für den Integritätsschutz von Daten und die Authentizität der involvierten Kommunikationsparteien, sowie Schlüsselaustauschverfahren. Jedoch ist die Berechnung asymmetrischer Kryptographieverfahren sehr aufwendig im Vergleich zu symmetrischer Kryptographie. Ressourcenbeschränkte industrielle Geräte können solche Onboarding-Protokolle schlecht unterstützen, die auf asymmetrischer Kryptographie basieren.

Aufgabe der vorliegenden Erfindung ist es ein Verfahren, ein Computerprogrammprodukt, ein computerlesbares Speichermedium sowie ein Onboarding-System zu schaffen, mittels welchen ein effizientes Geräte-Onboarding-Verfahren für industrielle Geräte mit beschränkten Ressourcen realisiert werden kann.

Diese Aufgabe wird durch ein Verfahren, ein Computerprogrammprodukt, ein computerlesbares Speichermedium sowie ein Onboarding-System gemäß den unabhängigen Patentansprüchen gelöst. Vorteilhafte Ausgestaltungsformen sind in den Unteransprüchen angegeben.

Ein Aspekt der Erfindung betrifft ein Verfahren zum Durchführen eines Geräte-Onboarding-Prozesses geschützt auf Basis symmetrischer Kryptographie bei einem Gerät mittels eines Onboarding-Systems. Es wird das Gerät mit einem symmetrischen geräteindividuellen Onboarding-Schlüssel, welcher nachfolgend auch als DICE-Onboarding-Schlüssel bezeichnet werden kann, bereitgestellt. Es erfolgt das Empfangen einer mit dem Onboarding-Schlüssel geschützten Onboarding-Anfrage des Gerätes mittels einer elektronischen Recheneinrichtung, wobei die elektronische Recheneinrichtung einem Nutzer zugeordnet ist, bei welchem das Gerät angemeldet werden soll. Insbesondere soll auf eine sichere Art und Weise vertraulich in der Domäne des Nutzers das Gerät integriert, angemeldet, betrieben bzw. in Betrieb genommen werden können.

Es erfolgt dann das Übermitteln der Onboarding-Anfrage von der elektronischen Recheneinrichtung an eine weitere elektronische Recheneinrichtung des Onboarding-Systems mittels der elektronischen Recheneinrichtung, wobei die weitere elektronische Recheneinrichtung einem Onboarding-Dienstleister für das Gerät zugeordnet ist. Das Gerät wird auf Basis der übermittelten Onboarding-Anfrage mittels der weiteren elektronischen Recheneinrichtung verifiziert. Dabei kann beispielsweise eine kryptographische Prüfung der Onboarding-Anfrage mithilfe des symmetrischen Onboarding-Schlüssels und das Verifizieren des Geräts auf Basis der übermittelten Onboarding-Anfrage erfolgen. Es wird eine Onboarding-Antwort in Abhängigkeit von der Verifizierung erzeugt und es erfolgt das Übertragen der Onboarding-Antwort an die elektronische Recheneinrichtung mittels der weiteren elektronischen Recheneinrichtung. Es wird dann der Geräte-Onboarding-Prozess auf Basis der Onboarding-Antwort durchgeführt, wobei zwischen der elektronischen Recheneinrichtung und dem Gerät ein geschützter Kommunikationskanal auf Basis eines symmetrischen Geheimnisses aufgebaut wird.

Insbesondere ist somit ein Onboarding-Prozess vorgeschlagen, welches insbesondere auf der sogenannten DICE Architektur (Device Identifier Composition Engine) basiert, bei dem ein industrielles Gerät nur symmetrische Kryptographie berechnen soll und somit ein Onboarding mit geringen Rechenaufwand durchgeführt werden kann.

Dabei kann die elektronische Recheneinrichtung im Wesentlichen als sogenannter Domain-Registrar bezeichnet werden. Die weitere elektronische Recheneinrichtung kann auch als Vendor-Service bezeichnet werden.

Insbesondere kann somit vorgesehen sein, dass beispielsweise ein Nutzer ein Gerät kauft. Nun wird der Nutzer und das Gerät ein Vertrauen mit einer vertrauenswürdigen, dritten Partei aufbauen, welche insbesondere der Hersteller ist. Das Gerät wiederum soll in der Nutzer-Domäne registriert werden.

Bei dem DICE handelt es sich insbesondere um eine Architektur, die zur Erhöhung der Sicherheit von industriellen Geräten, begrenzten Ressourcen, insbesondere speziell ohne Hardware Secure-Element, dient. DICE implementiert einen sogenannten Measured-Boot, in dem eine Schlüsselkette zwischen verschiedenen Software-Niveaus hergestellt wird. Mit DICE können Schlüssel generiert werden, die abhängig vom nächsten Boot-Layer sind. Somit kann sichergestellt werden, dass nur im Falle einer vertrauenswürdigen Firmware die richtigen Schlüsselhierarchie auf dem Gerät reproduziert werden kann.

Insbesondere, wie bisher erwähnt, basieren die meisten Device-Onboarding-Verfahren gemäß dem Stand der Technik auf asymmetrischer Kryptographie, beispielsweise die Verwendung digitaler Signaturen. Ein Geräte-Onboarding-Prozess, das rein auf symmetrischer Kryptographie basiert, ist hierbei deutlich effizienter zu rechnen, insbesondere auf ressourcenbeschränkten Geräten, auf denen asymmetrische Kryptographie nicht eingesetzt werden kann. Hierbei stellt eine Herausforderung das Schlüsselmanagement inklusive Schlüsselupdate mit steigender Anzahl der beteiligten Geräte dar. Im Rahmen dieser Erfindung wird somit ein Geräte-Onboarding-Prozess vorgestellt, das rein auf symmetrischer Kryptographie beruht. Die Protokolle profitieren dabei insbesondere von der sogenannten DICE-Architektur für Schlüsselgenerierung, wodurch der Aufwand hierfür deutlich verringert werden kann.

Die Hauptannahme im Rahmen dieser Erfindung ist, dass der Hersteller eines Gerätes, insbesondere der Onboarding-Dienstleister (Vendor-Service), eine DICE-Schlüsselhierarchie seiner Geräte nachbilden kann. Eine wesentliche Notwendigkeit ist dabei die Kenntnis einer Information, die für die Schlüsselableitung genutzt wird. Dies kann das beispielsweise DICE Unique Device Secret (UDS) eines Gerätes oder DICE Compound Device Identifier (CDI) einer definierten Boot-Stage sein. Hierzu muss dem Vendor-Service die konkrete Geräteinstanz inklusive der darauf ausgeführten Software bekannt sein.

Durch die Verwendung der DICE-Architektur kann ein Vendor-Service prüfen, ob auf dem Gerät auch beispielsweise eine Originalsoftware ausgeführt wird.

Insbesondere bietet somit die Erfindung die Möglichkeit Schlüssel aus der DICE-Kette für Onboarding-Prozesse auf Basis symmetrischer und effizienter Kryptographie zu nutzen. Zudem ist es möglich effizient durch eine Änderung der Konfigurationsparameter oder einer Software des Gerätes beim Vendor-Service und im Gerät selbst einheitlich diese Schlüssel zu aktualisieren, zum Beispiel eine Restriktion auf Einmalnutzung. Der Vendor-Service kann im Rahmen des Onboardings feststellen, ob in einem Gerät die originale, beziehungsweise vorgesehene Software ausgeführt wird oder ob diese manipuliert worden ist.

Im Gegensatz zu der Verwendung asymmetrischer Schlüssel für ein Geräte-Onboarding-Prozess sind die Protokolle dieser Erfindung effizienter zu rechnen und bieten trotzdem eine flexible Möglichkeit symmetrischen Schlüssel zu aktualisieren. Die Protokolle sind für industrielle Geräte mit beschränkten Ressourcen geeignet. Die Protokolle sind aber auch für stärkere Geräte mit unbeschränkten Ressourcen nutzbar.

Der vorgeschlagene Geräte-Onboarding-Prozess im Rahmen dieser Erfindung eignet sich insbesondere für Prä und Post-Quantenkryptographieanwendungen. Bei Post- Quantenkryptographieanwendungen kann ferner beispielsweise auch ein TLS-Kanal zwischen Domaine-Registrar und dem Vendor-Service beispielhaft mit einem KEMTLS-Kanal für höhere Effizienz ersetzt werden. Ein Gerät ist dabei insbesondere als ein Peer, ein Client oder allgemein eine beliebige Recheneinheit ausgebildet, die eingeschränkte Ressourcen bzw. Rechenleitung hat.

Gemäß einer vorteilhaften Ausgestaltungsform wird als Onboarding-Schlüssel ein einzigartiges Gerätegeheimnis bereitgestellt. Insbesondere kann dieses einzigartige Gerätegeheimnis dem sogenannten Dice Unique Device Secret (UDS) entsprechen. Somit ist es ermöglicht, dass mittels der DICE-Architektur vorteilhaft das Verfahren durchgeführt werden kann.

Ebenfalls vorteilhaft ist, wenn als Onboarding-Schlüssel eine zusammengesetzte Geräteerkennung bereitgestellt wird. Insbesondere entspricht somit der Onboarding-Schlüssel einem sogenannten Compound Device Identifier (CDI) für die DICE-Architektur. Insbesondere kann somit auch innerhalb eines definierten Boot-Stage ein zuverlässiges Onboarding bereitgestellt werden.

Es hat sich weiterhin als vorteilhaft erwiesen, wenn die zusammengesetzte Geräteerkennung in einer definierten Boot-Stage des Geräts bereitgestellt wird. Insbesondere kann somit der Onboarding-Schlüssel zusätzlich von der Geräte-Firmware abhängig sein und in einer definierten Boot-Stage erzeugt werden.

Eine weitere vorteilhafte Ausgestaltungsform sieht vor, dass zusätzlich mittels des Onboarding-Dienstleisters eine Softwareverifizierung für das Gerät durchgeführt wird. Somit kann der Dienstleister überprüfen, ob es sich bei der auf dem Gerät installierten Software auch beispielsweise um eine originale und vertrauenswürdige Firm-Software handelt. Somit kann verifiziert werden, dass die auf dem Gerät installierte Software auch zuverlässig genutzt werden kann.

Weiterhin vorteilhaft ist, wenn die Onboarding-Anfrage integritätsgeschützt und vertraulich von dem Gerät an die elektronische Recheneinrichtung übertragen wird. Insbesondere können zumindest Teile davon vertraulich und integritätsgeschützt sein, während andere Teile wiederum nicht vertraulich sein müssen, aber integritätsgeschützt. Somit kann ein zuverlässiges Onboarding- des Geräts realisiert werden.

Ferner hat es sich als vorteilhaft erwiesen, wenn die Onboarding-Anfrage mit einem Zufallstoken versehen wird. Der Zufallstoken kann auch als Nonce bezeichnet werden. Somit kann beispielsweise die "freshness" der Onboarding-Anfrage überprüft werden.

Eine nochmals weitere Ausgestaltungsform sieht vor, dass beim Weiterleiten der Onboarding-Anfrage von der elektronischen Recheneinrichtung zu der weiteren elektronischen Recheneinrichtung ein sicherer Kanal aufgebaut wird. Insbesondere kann beispielsweise der sogenannte Domain-Registrar die Geräte-Onboarding-Anfrage erhalten und leitet diesen wiederum an den Vendor-Service über den geschützten Kanal, insbesondere den sicheren Kanal, beispielsweise TLS oder auch KEMTLS oder auch KEMTLS für Post-Quantumanwendungen weiter. Der Aufbau dieses Kanals kann durch asymmetrische Kryptographie erfolgen, da der Domain-Registrar und der Vendor-Service über ausreichend Rechenleistung verfügen. Über diesen Kanal können zusätzliche Informationen der Geräte-Onboarding-Anfrage vom Domain-Registrar angehängt werden. Der Domain-Registrar-Onboarding-Request, also die Weiterleitung der Geräte-Onboarding-Anfrage von der elektronischen Recheneinrichtung zur weiteren elektronischen Recheneinrichtung, kann optional zu dem durch eine Signatur des Domain-Registrars zusätzlich oder alternativ geschützt werden.

Ferner hat es sich als vorteilhaft erwiesen, wenn der sichere Kanal mittels eines asymmetrischen Verschlüsselungsverfahrens aufgebaut wird. Insbesondere kann somit der sichere Kanal beispielsweise mittels der asymmetrischen Kryptographie erzeugt werden.

Weiterhin vorteilhaft ist, wenn die Onboarding-Antwort zusätzlich mittels einer Signatur des Onboarding-Dienstleisters geschützt wird. Insbesondere, falls beispielsweise eine optionale Signatur vorhanden ist, verifiziert der Vendor-Service zuerst die Signatur der Domain-Registrar-Onboarding-Anfrage. Der Vendor-Service identifiziert das Gerät und die aktuelle Softwareversion. Dies kann auf Basis der Device-Onboarding Anfrage vom Gerät realisiert werden, wobei das Gerät diese Informationen in die Device-Onboarding Anfrage integriert, welche dabei integritätsgeschützt aber nicht verschlüsselt. Das Gerät schickt diese an den Domain Registrar im Rahmen der Device-Onboarding-Anfrage. Der Domain Registrar leitet sie an den Vendor Service weiter. Dabei können Identifikationsmerkmale mit der Onboarding-Anfrage vom Gerät stammen. Diese können mit dem DICE-Onboarding-Schlüssel auf Integrität geschützt sein. Sie dürfen aber nicht verschlüsselt sein, weil sie zur Schlüsselableitung dienen sollen. Mit diesen Informationen kann der Vendor-Service die DICE-Schlüsselhierarchie nachbilden und den DICE-Onboarding-Schlüssel erzeugen. Dieser Schlüssel wird verwendet, um die Authentizität der Geräte-Onboarding-Anfrage des Geräts zu prüfen und den Zufallstoken zu entschlüsseln, sowie möglicherweise auch weitere spezifische Geräteinformationen. In diesem Schritt kann der Vendor-Service erkennen, ob die Software des Geräts manipuliert wurde. Der Vendor-Service generiert einen Schlüssel Alias Key 2 über die DICE-Schlüsselhierarchie und sendet diese zusammen mit dem Zufallstoken über die Domain-Registrar-Onboarding-Antwort über den geschützten Kanal zurück zum Domain-Registrar. Die Domain-Registrar-Onboarding-Antwort kann zudem optional durch eine Signatur des Vendor-Services zusätzlich geschützt werden. Falls eine optionale Signatur vorhanden ist, verifiziert der Domain-Registrar zuerst die Signatur der Domain-Registrar-Onboarding-Antwort, insbesondere erstellt vom Vendor-Service. Der Domain-Registrar prüft, ob die Device_ID, also die Geräteidentifikation, vom Vendor-Service erfolgreich validiert wurde und generiert einen symmetrischen Schlüssel SK1, der für den zukünftig geschützten Kanal mit dem Gerät verwendet werden soll. SK1 kann dabei mit einer Key Derivation Function (KDF) oder einer sicheren Schlüsselableitung oder Generierungsfunktion erzeugt werden. Es wird eine Device-Onboarding-Antwort bestehend aus SK1 und der Nonce/Zufallstoken erstellt, mit dem Alias Key 2 auf Basis von symmetrischer Kryptographie geschützt, insbesondere integritätsgeschützt und vertraulichkeitsgeschützt, und an das Gerät weitergeleitet. Das Gerät erzeugt sich ebenfalls wiederum einen DICE Alias Key 2 nutzt diesen, um die Geräte-Onboarding-Antwort zu verifizieren und zu entschlüsseln. Das Gerät verifiziert, ob der Zufallstoken mit der ursprünglich generierten Zufallstoken übereinstimmt, insbesondere wird eine sogenannte Freshness-Prüfung durchgeführt. Falls alle Schritte erfolgreich waren, akzeptiert das Gerät den neu generierten Schlüssel SK1 vom Domain-Registrar für den sicheren Kanal zwischen diesen beiden Parteien und somit ist das Onboarding abgeschlossen.

Ferner hat es sich als vorteilhaft erwiesen, wenn die Onboarding-Antwort für das Gerät mittels eines Einmalschlüssels mittels der elektronischen Recheneinrichtung geschützt wird. Der Vorteil ist, dass der Einmalschlüssel für die weitere elektronischen Recheneinrichtung bekannt ist. Daher sollte dieser Schlüssel nur einmal verwendet werden. Dieser Schlüssel dient für eine sichere Übertragung für einen anderen langlebenden (longterm) Schlüssel an das Gerät, der für die weitere elektronische Recheneinrichtung nicht bekannt ist, für die elektronische Recheneinrichtung aber schon.

Ferner hat es sich als vorteilhaft erwiesen, wenn die Onboarding-Anfrage in Abhängigkeit von einem Konfigurationsparameter des Onboarding-Dienstleisters bearbeitet wird und der Einmalschlüssel zufällig erzeugt wird oder über eine Schlüsselableitungsfunktion in Abhängigkeit von einem Konfigurationsparameter der Onboarding-Anfrage des Gerätes durch den Onboarding-Dienstleister erzeugt wird. Der zusätzliche Vorteil eine Schlüsselableitungsfunktion zu nutzen liegt darin, dass das Gerät bereits sicher stellen kann, dass der Einmalschlüssel nur einmal erzeugt/verwendet wird und der Einmalschlüssel an den aktuellen Onboarding-Vorgang geräteseitig gebunden ist
Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung auch ein computerlesbares Speichermedium mit zumindest dem Computerprogrammprodukt nach dem vorhergehenden Aspekt.

Ein nochmals weiterer Aspekt der Erfindung betrifft ein Onboarding-System zum Durchführen eines Geräte-Onboarding-Prozesses geschützt auf Basis symmetrischer Kryptographie bei einem Gerät, mit zumindest einer elektronischen Recheneinrichtung und einer weiteren elektronischen Recheneinrichtung, wobei das Onboarding-System zum Durchführen eines Verfahrens nach dem vorhergehenden Aspekt ausgebildet ist. Insbesondere wird das Verfahren mittels des Onboarding-Systems durchgeführt.

Vorteilhafte Ausgestaltungsformen des Verfahrens sind als vorteilhafte Ausgestaltungsformen des Computerprogrammprodukts, des computerlesbaren Speichermediums sowie des Onboarding-Systems anzusehen. Das Onboarding-System weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
FIG 1 ein schematisches Ablaufdiagramm einer DICE-Architektur;
FIG 2 ein schematisches Ablaufdiagramm gemäß einer Ausführungsform des Verfahrens;
FIG 3 ein weiteres schematisches Ablaufdiagramm gemäß einer weiteren Ausführungsform des Verfahrens; und
FIG 4 ein weiteres schematisches Ablaufdiagramm gemäß einer nochmals weiteres Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

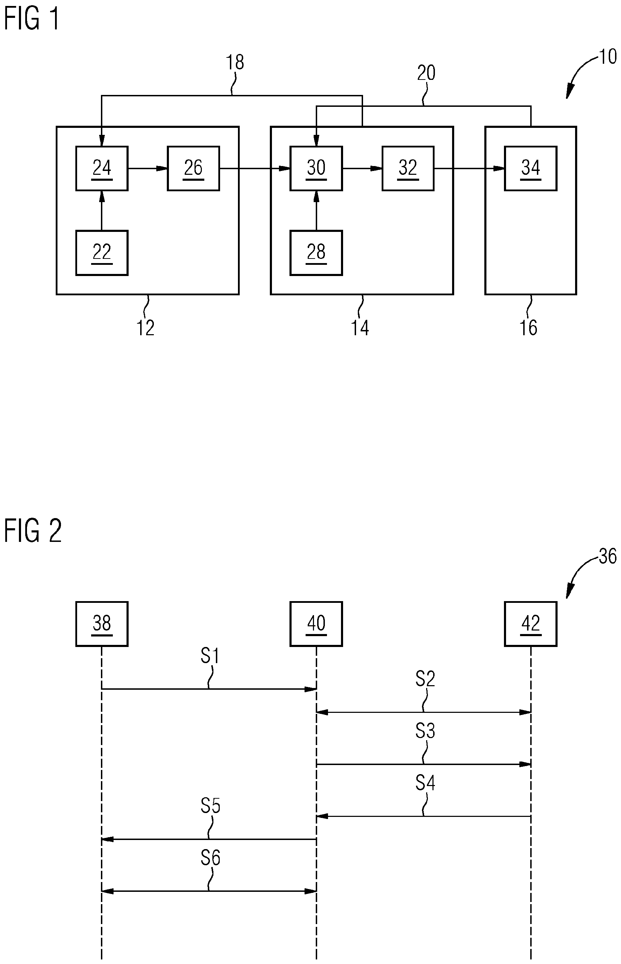

FIG 1 zeigt ein schematisches Blockschaltbild einer DICE-Architektur 10. Hierzu zeigt die FIG 1 eine nullte Schicht 12, beispielsweise auf Hardwareebene, eine erste Schicht 14, welche insbesondere einen ersten änderbaren Code darstellt, sowie einer dritten Schicht 16, welcher insbesondere einer Firmware entspricht. Zwischen der nullten Schicht 12 und der ersten Schicht 14 findet wiederum eine erste Messung 18 statt. Zwischen der ersten Schicht 14 und der zweiten Schicht 16 findet eine zweite Messung 20 statt.

Die nullte Schicht 12 weist wiederum einzigartiges Gerätegeheimnis 22 (Unique Device Secret - UDS) auf. Dieses ist wiederum mit einer Einwegfunktion 24 (One-Way-Function - OWF) gekoppelt. Die Einwegfunktion 24 generiert wiederum eine zusammengesetzte Geräteerkennung 26, welches auch als Compound Device Identifier (CDI) bezeichnet werden kann.

Die erste Schicht 14 weist wiederum eine Konfiguration 28 auf, welche mit einer Schlüsselableitungsfunktion 30, welche auch als Key-Derivation-Function (KDF) bezeichnet werden kann, gekoppelt ist. Ferner ist auch die zusammengesetzte Geräteerkennung 26 mit der Key-Derivation-Function gekoppelt. Die Key-Derivation-Function ist wiederum mit einem Schlüssel 32 innerhalb der ersten Schicht 14 gekoppelt.

Die zweite Schicht 16 weist wiederum eine Konsumentensoftware 34 auf. Der Schlüssel 32 ist wiederum mit der Konsumentensoftware 34 gekoppelt.

FIG 2 zeigt ein schematisches Ablaufdiagramm gemäß einer Ausführungsform des Verfahrens. Insbesondere ist es vorliegend ein Onboarding-System 36 gezeigt. Das Onboarding-System 36 weist zumindest ein Gerät 38, eine elektronische Recheneinrichtung 40, sowie eine weitere elektronische Recheneinrichtung 42 auf. Die elektronische Recheneinrichtung 40 kann beispielsweise einem Nutzer zugeordnet sein, welcher das Gerät 38 anmelden möchte. Die elektronische Recheneinrichtung 40 kann auch als Domain-Registrar bezeichnet werden. Die weitere elektronische Recheneinrichtung 42 kann insbesondere einem Onboarding-Dienstleister, beispielsweise einem Hersteller des Geräts 38 zugeordnet sein. Die weitere elektronische Recheneinrichtung 42 kann auch als Vendor-Service bezeichnet werden.

Ein Gerät 38 ist dabei insbesondere als ein Peer, ein Client oder allgemein eine beliebige Recheneinheit ausgebildet, die eingeschränkte Ressourcen bzw. Rechenleitung hat.

Die FIG. 2 zeigt insbesondere, dass das Gerät 38 den Onboarding-Schlüssel von der DICE-Architektur erzeugt. Ferner schützt das Gerät 38 eine Geräte-Onboarding-Anfrage mit der DICE-Architektur und einem entsprechenden Onboarding-Schlüssel. Der Onboarding-Schlüssel wird aus der DICE-Architektur abgeleitet. Dieser Schlüssel wird für den Schutz der Geräte-Onboarding-Anfrage verwendet. Diese Anfrage beinhaltet zumindest die folgenden drei Informationen: die Geräteidentifikation, die Software-Version, insbesondere beide mit dem Onboarding-Schlüssel integritätsgeschützt, sowie dem Zufallstoken, insbesondere mit dem Onboarding-Schlüssel vertraulichkeits- und optional integritätsgeschützt. In einem ersten Schritt S1 sendet dann wiederum das Gerät 38 die Geräte-Onboarding-Anfrage an die elektronische Recheneinrichtung 40. In einem zweiten Schritt S2 wird zwischen der elektronischen Recheneinrichtung 40 und der weiteren elektronischen Recheneinrichtung 42 ein sicherer Kanal, insbesondere ein TLS-Kanal, aufgebaut. Nachfolgend wird in einem dritten Schritt S3, insbesondere wenn der sichere Kanal aufgebaut ist, eine Domain-Registrar-Onboarding-Anfrage von der elektronischen Recheneinrichtung 40 an die weitere elektronische Recheneinrichtung 42 übermittelt. Die Domain-Registrar-Onboarding-Anfrage beinhaltet die Informationen und Identifikationsmerkmale aus der Device-Onboarding-Anfrage in einer geschützten Form. Möglicherweise können hier zusätzliche Informationen von der elektronischen Recheneinrichtung 40 dazu ergänzt werden. Die weitere elektronische Recheneinrichtung 42 überprüft dabei eine Geräteidentifikation sowie eine Softwareversion des Geräts 38, die in der Onboarding-Anfrage erhalten sind. Die weitere elektronische Recheneinrichtung 42 erzeugt einen Onboarding-Schlüssel, basierend auf den Identifikationsmerkmalen aus der Device-Onboarding Anfrage (integritätsgeschützt). Die weitere elektronische Recheneinrichtung 42 entschlüsselt den Zufallstoken. Die Geräteidentifikation und die Software-Version sind beide mit dem Onboarding-Schlüssel integritätsgeschützt. Diese werden zur Erzeugung des Schlüssel verwendet. Im Anschluss daran wird ein Einmalschlüssel SK1 mittels der DICE Architektur erzeugt. SK1 kann dabei mit einer Key Derivation Function (KDF) oder einer sichere Schlüsselableitung oder Generierungsfunktion erzeugt werden. In einem vierten Schritt S4 wird dann wiederum von der weiteren elektronischen Recheneinrichtung 42 eine entsprechende erste Geräte-Onboarding-Antwort übermittelt. Die elektronische Recheneinrichtung 40 überprüft dabei, ob das Gerät 38 in Ordnung ist und erzeugt einen zufälligen Session-Key SK2, unabhängig von der DICE-Architektur. Die elektronische Recheneinrichtung 40 schützt die erste Geräte-Onboarding-Antwort mit einem Schlüssel SK1. In einem fünften Schritt S5 erfolgt dann wiederum das Übermitteln einer zweiten Geräte-Onboarding-Antwort von der elektronischen Recheneinrichtung 40 an das Gerät 38. Das Gerät 38 entschlüsselt wiederum die zweite Geräte-Onboarding-Antwort beinhaltend SK2 mit dem Einmalschlüssel SK1. Im Anschluss daran überprüft und löscht das Gerät 38 den Zufallstoken und den Schlüssel SK1, wenn die Prüfung erfolgreich war. Das Gerät 38 akzeptiert dabei den Schlüssel SK2. In einem sechsten Schritt S6 wird dann wiederum der sichere Kanal mit SK2 zwischen dem Gerät 38 und der elektronischen Recheneinrichtung 40 aufgebaut.

Insbesondere beschreibt somit die FIG 2 eine erste Möglichkeit des Onboarding-Prozesses. Im Auslieferungszustand wird das Gerät 38 beim Nutzer, insbesondere beim Domain-Registrar, welcher vorliegend insbesondere die elektronischen Recheneinrichtung 40 entspricht, angeschlossen und kann sich automatisch mithilfe dieses Protokolls in die neue Domäne integrieren. Es erfolgt das sogenannte Booting des Gerätes 38. Das Gerät 38 bootet und lädt die aktuelle Schlüsselhierarchie mithilfe der DICE-Architektur 10. Hierbei wird ebenfalls ein Onboarding-Schlüssel erzeugt.

Durch einen Trigger, insbesondere intern im Gerät 38 oder extern durch einen Nutzer erzeugt, wird der Onboarding-Schlüssel verwendet, um eine Geräte-Onboarding-Anfrage zu erzeugen und mit einem symmetrischen Verfahren zu schützen, insbesondere integritätsgeschützt sowie vertraulichkeitsgeschützt. Beispielhaft kann dies ein "Authenticated Encryption with Associated Data" (AEAD)-Verfahren sein. Diese Anfrage beinhaltet zumindest die folgenden drei Informationen: die Geräteidentifikation, die Software-Version sowie dem Zufallstoken. Die Geräteidentifikation wird für die Identifizierung des Geräts 38 und die Software-Version für die Identifizierung der aktuell genutzten Software verwendet. Beide Informationen werden mit dem DICE-Onboarding-Schlüssel integritätsgeschützt, aber nicht verschlüsselt. Der Zufallstoken wird für Freshness-Zwecke verwendet und muss zusätzlich verschlüsselt sein. Weitere Informationen des Geräts 38 können je nach Anwendung in der Geräte-Onboarding-Anfrage ergänzt werden.

Die elektronische Recheneinrichtung 40 erhält die Geräte-Onboarding-Anfrage und leitet diese an den sogenannten Vendor-Service, welcher vorliegend, insbesondere dem Onboarding-Dienstleister beziehungsweise der weiteren elektronischen Recheneinrichtung 42 entspricht, weiter. Hierbei kann insbesondere ein sicherer Kanal, beispielsweise ein (TLS)-Kanal verwendet werden. Der Aufbau dieses Kanals kann durch asymmetrische Kryptographie erfolgen, da die elektronische Recheneinrichtung 40 und die weitere elektronische Recheneinrichtung 42 über ausreichend Rechenleistung verfügen. Über diesen Kanal können zusätzliche Informationen der Domain-Registrar-Onboarding-Anfrage von der elektronischen Recheneinrichtung 40 angehängt werden. Die Domain-Registrar-Onboarding-Anfrage kann optional zudem durch eine Signatur der elektronischen Recheneinrichtung 40 zusätzlich oder alternativ geschützt werden.

Falls die optionale Signatur vorhanden ist, verifiziert die weitere elektronische Recheneinrichtung 42 zuerst die Signatur der Domain-Registrar-Onboarding-Anfrage, insbesondere erstellt von der elektronischen Recheneinrichtung 40. Die weitere elektronische Recheneinrichtung 42 identifiziert das Gerät 38 und die aktuelle Software-Version. Mit diesen Informationen kann die weitere elektronische Recheneinrichtung 42 die DICE-Schlüsselhierarchie nachbilden und den DICE-Onboarding-Schlüssel erzeugen. Dieser Schlüssel wird verwendet, um die Integrität/Authentizität der Geräte-Onboarding-Anfrage des Geräts 38 zu prüfen und den Zufalls-Token zu entschlüsseln, möglicherweise auch weitere spezifische Geräteinformationen. In diesem Schritt kann die weitere elektronische Recheneinrichtung 42 erkennen, ob die Software des Geräts 38 manipuliert wurde. Die weitere elektronische Recheneinrichtung 42 generiert einen Schlüssel, einen one-time Alias-Key über die DICE-Schlüsselhierarchie und sendet diesen zusammen mit dem Zufallstoken über eine Geräte-Onboarding-Antwort über den geschützten Kanal zurück zur elektronischen Recheneinrichtung 40. Die Geräte-Onboarding-Antwort kann zudem optional durch eine Signatur der weiteren elektronischen Recheneinrichtung 42 zusätzlich geschützt werden.

Falls eine optionale Signatur vorhanden ist, verifiziert die elektronische Recheneinrichtung 40 zuerst die Signatur der Geräte-Onboarding-Antwort, erstellt von der weiteren elektronischen Recheneinrichtung 42. Die elektronische Recheneinrichtung 40 prüft, ob die Geräteidentifikation von der weiteren elektronischen Recheneinrichtung 42 erfolgreich validiert wurde und generiert einen symmetrischen Schlüssel SK1, der für den zukünftigen geschützten Kanal mit dem Gerät 38 verwendet werden soll. Es wird dann eine Geräte-Onboarding-Antwort, bestehend aus SK1 und dem Zufallstoken erstellt, mit dem Alias-Key 2 auf Basis von symmetrischer Kryptographie geschützt und an das Gerät 38 weitergeleitet.

Das Gerät 38 erzeugt sich ebenfalls ein DICE-Alias-Key 2, nutzt diesen, um die Geräte-Onboarding-Antwort zu verifizieren und zu entschlüsseln. Das Gerät 38 verifiziert, ob der Zufallstoken mit dem ursprünglich generierten Zufallstoken übereinstimmt, und führt somit eine Freshness-Prüfung durch. Falls alle Schritte erfolgreich waren, akzeptiert das Gerät 38 den neu generierten Schlüssel SK1 von der elektronischen Recheneinrichtung 40 für den sicheren Kanal zwischen diesen Parteien und somit ist das Onboarding abgeschlossen.

Gemäß der Ausgestaltungsform nach FIG 2 sind insbesondere in der Geräte-Onboarding-Anfrage die Geräteidentifikation und die Software-Version, insbesondere beide mit dem Onboarding-Schlüssel integritätsgeschützt, sowie dem Zufallstoken, insbesondere mit dem Onboarding-Schlüssel vertraulichkeits- und optional integritätsgeschützt. Die Domain-Registrar-Onboarding-Anfrage ist mit dem DICE-Alias key und der Geräte-Onboarding-Anfrage integritäts- und vertraulichkeitsgeschützt. Die Geräte-Onboarding-Antwort von der weiteren elektronischen Recheneinrichtung 42 mit DICE Alias key, der bestätigten Geräteidentifikation und dem Nonce sind integritäts- und vertraulichkeitsgeschützt. Die Geräte-Onboarding-Antwort von der elektronischen Recheneinrichtung 40 mit dem SK2 und dem Nonce sind integritäts- und vertraulichkeitsgeschützt.

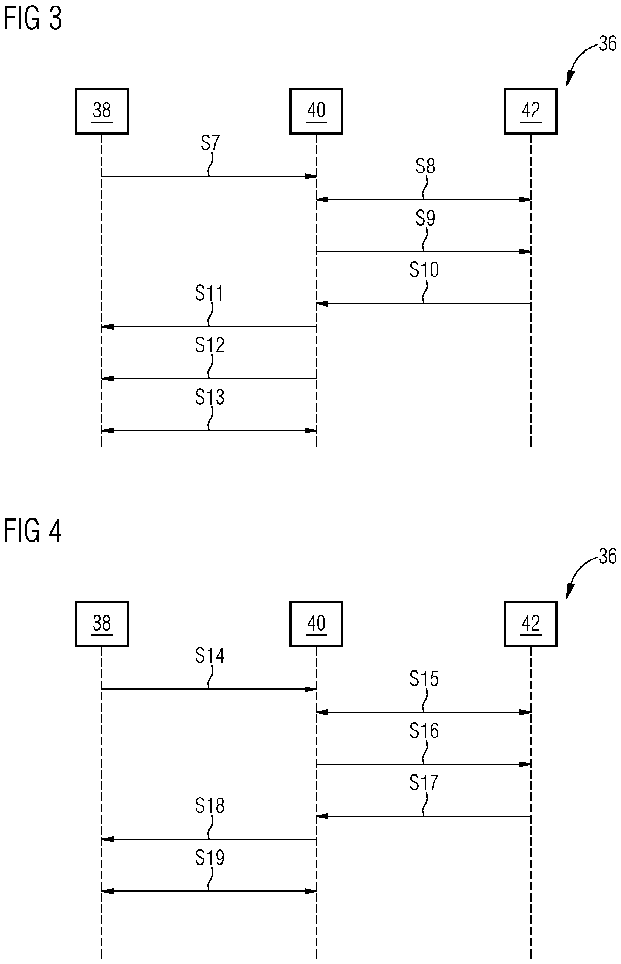

FIG 3 zeigt ein weiteres schematisches Ablaufdiagramm gemäß einer Ausführungsform des Verfahrens. Die FIG 3 zeigt insbesondere, dass das Gerät 38 den Onboarding-Schlüssel mit der DICE-Architektur 10 erzeugt. Diese Anfrage beinhaltet zumindest die folgenden drei Informationen: die Geräteidentifikation, die Software-Version, insbesondere beide mit dem Onboarding-Schlüssel integritätsgeschützt, sowie dem Zufallstoken, insbesondere mit dem Onboarding-Schlüssel vertraulichkeits- und optional integritätsgeschützt. Eine Geräte-Onboarding-Anfrage wird mit dem Onboarding-Schlüssel durch das Gerät 38 geschützt. In einem siebten Schritt S7 wird die Geräte-Onboarding-Anfrage an die elektronische Recheneinrichtung 40 übertragen. In einem achten Schritt S8 erfolgt wiederum der Aufbau eines sicheren Kanals zwischen der elektronischen Recheneinrichtung 40 und der weiteren elektronischen Recheneinrichtung 42. Die elektronische Recheneinrichtung 40 erzeugt wiederum einen Einmalschlüssel SK1, insbesondere als Einmalgeheimnis (one-time Secret) und ergänzt die Geräte-Onboarding-Anfrage zur Domain-Registrar-Onboarding-Anfrage. Die Domain-Registrar-Onboarding-Anfrage wird in einem neunten Schritt S9 von der elektronischen Recheneinrichtung 40 an die weitere elektronische Recheneinrichtung 42 übertragen und kann optional signiert sein. Falls diese signiert ist, muss der Vendor Service die Signatur dann bei dem Empfang dieser Anfrage zuerst validieren. Bei der weiteren elektronischen Recheneinrichtung 42 folgt wiederum eine Überprüfung der Geräteidentifikation sowie der Software-Version. Es wird ein Onboarding-Schlüssel aus der DICE-Architektur erzeugt. Es erfolgt das Entschlüsseln der Geräte-Onboarding-Anfrage mittels des erzeugten Onboarding-Schlüssels. Der Schlüssel SK1 sowie der Zufallstoken wird mittels diesen Onboarding-Schlüssels geschützt. In einem zehnten Schritt S10 wird wiederum die erste Geräte-Onboarding-Antwort von der weiteren elektronischen Recheneinrichtung 42 an die elektronische Recheneinrichtung 40 übermittelt. Die elektronische Recheneinrichtung 40 überprüft, ob die Geräteidentifikation in Ordnung ist. Die elektronische Recheneinrichtung 40 übermittelt in einem elften Schritt S11 dann wiederum die zweite Geräte-Onboarding-Antwort an das Gerät 38. Das Gerät 38 entschlüsselt die zweite Geräte-Onboarding-Antwort mit dem DICE-Onboarding-Schlüssel. Das Gerät 38 überprüft und löscht den Zufallstoken und akzeptiert einen Schlüssel SK1. Die elektronische Recheneinrichtung 40 erzeugt wiederum einen Session Key SK2 und schützt den Schlüssel SK2 mit SK1. Es erfolgt dann in einem zwölften Schritt S12 der Austausch des SK2 zwischen der elektronischen Recheneinrichtung 40 und dem Gerät 38. Das Gerät 38 entschlüsselt den Schlüsselaustausch SK2 mit SK1 und akzeptiert SK2. In einem dreizehnten Schritt S13 wird dann wiederum ein sicherer Kanal zwischen dem Gerät 38 und der elektronischen Recheneinrichtung 40 mithilfe des SK2 aufgebaut.

Insbesondere beschreibt somit die FIG 3 eine weitere Variante gegenüber der vorgestellten Variante in FIG 2. Im Gegensatz zu dem Verfahren gemäß FIG 2 wird statt dem Alias-Key 2 ein zufälliger symmetrischer Schlüssel SK1 für die Authentifikation und Autorisierung des Onboarding des Geräts 38 in der Domäne der elektronischen Recheneinrichtung 40 verwendet. Damit wird vermieden, den Alias-Key 2 an die elektronische Recheneinrichtung 40 weiterzugeben und ein Update der Alias-Keys durchführen zu müssen, welches ein neues Booten des Gerätes 38 erfordert.

Im nachfolgenden sind insbesondere die Unterschiede zum Verfahren gemäß FIG 2 erklärt. Insbesondere beim Übermitteln der Device-Onboarding-Anfrage wird der Unterschied darin gesehen, dass die elektronische Recheneinrichtung 40 einen gerätespezifischen Schlüssel SK1 erzeugt und diesen in die Geräte-Onboarding-Anfrage ergänzt. Ferner wird bei der Geräte-Onboarding-Antwort der Schlüssel SK1 sowie der Zufallstoken, der auch als Nonce bezeichnet werden kann, welcher zur Freshness-prüfung verwendet wird, von der weiteren elektronischen Recheneinrichtung 42 verschlüsselt in die Geräte-Onboarding-Antwort ergänzt und diesem mit dem DICE-Onboarding-Schlüssel geschützt, anstatt mit dem Alias-Key 2 wie in der FIG 2. In der entsprechenden ersten Geräte-Onboarding-Antwort wird kein Alias-Key 2 der weiteren elektronischen Recheneinrichtung 42 übergeben. Dadurch wird insbesondere die zweite Geräte-Onboarding-Antwort zwischen der elektronischen Recheneinheit 40 und dem Gerät 38 mit einem anderen Schlüssel geschützt. Das Onboarding findet dann mit dem Unterschied statt, dass die erste Geräte-Onboarding-Antwort nicht mit dem Alias-Key 2, sondern mit dem DICE-Onboarding-Schlüssel verifiziert wird.

In einer Variante dazu wird der SK1 nicht durch die elektronische Recheneinrichtung 40, sondern durch die weitere elektronische Recheneinrichtung 42 erzeugt und an die elektronische Recheneinrichtung 40 über den geschützten Kanal übergeben.

Ferner kann in einer Erweiterung des in FIG 3 dargestellten Verfahrens der symmetrischen Schlüssel SK1 durch einen zufällig generierten Schlüssel SK2 ausgetauscht werden, wobei der Austausch über den SK1 geschützt ist.

Gemäß der Ausgestaltungsform nach FIG 3 sind insbesondere in der Geräte-Onboarding-Anfrage die Geräteidentifikation und die Software-Version, insbesondere beide mit dem Onboarding-Schlüssel integritätsgeschützt, sowie dem Zufallstoken, insbesondere mit dem Onboarding-Schlüssel vertraulichkeits- und optional integritätsgeschützt. Die Domain-Registrar-Onboarding-Anfrage, welche der ist mit dem Schlüssel SK1 und der Geräte-Onboarding-Anfrage integritäts- und vertraulichkeitsgeschützt. Die erste Geräte-Onboarding-Antwort von der weiteren elektronischen Recheneinrichtung 42 mit SK1, der bestätigten Geräteidentifikation und dem Nonce sind integritäts- und vertraulichkeitsgeschützt.

FIG 4 zeigt eine nochmals weiteres alternatives Ablaufdiagramm gemäß einer Ausführungsform des Verfahrens. Die FIG 4 zeigt insbesondere, dass im Gerät 38 der Onboarding-Schlüssel von der DICE-Architektur 10 erzeugt wird. Ein Schlüssel SK1, insbesondere als Einmalschlüssel, bzw. one-time key, wird mittels eines Zufallstoken erzeugt und sicher abgespeichert. Die Geräte-Onboarding-Anfrage wird mittels des Onboarding-Schlüssels geschützt. Diese Anfrage beinhaltet zumindest die folgenden drei Informationen: die Geräteidentifikation, die Software-Version, insbesondere beide mit dem Onboarding-Schlüssel integritätsgeschützt sowie dem Zufallstoken, insbesondere mit dem Onboarding-Schlüssel vertraulichkeits- und optional integritätsgeschützt. In einer anderen Variante wird die Nonce nicht benötigt. SK1 wird beim Gerät 38 generiert, sicher gespeichert und in der Gerät-Onboarding-Anfrage geschützt. In einem vierzehnten Schritt S14 wird dann vom Gerät 38 die Geräte-Onboarding-Anfrage an die elektronische Recheneinrichtung 40 übermittelt. In einem fünfzehnten Schritt S15 wird zwischen der elektronischen Recheneinrichtung 40 und der weiteren elektronischen Recheneinrichtung 42 ein sicherer Kanal, beispielsweise ein TLS-Kanal, erzeugt. In einem sechzehnten Schritt S16 wird dann die Geräte-Onboarding-Anfrage von der elektronischen Recheneinrichtung 40 an die weitere elektronische Recheneinrichtung 42 als Domain-Registrar-Onboarding-Anfrage übermittelt. Es erfolgt dann mittels der weiteren elektronischen Recheneinrichtung 42 eine Überprüfung der Geräteidentifikation sowie der Software-Version. Ferner wird ein Onboarding-Schlüssel auf Basis der DICE-Architektur 10 erzeugt. Die Domain-Registrar-Onboarding wird mittels des erzeugten Onboarding-Schlüssels entschlüsselt. Mittels der weiteren elektronischen Recheneinrichtung 42 wird ein Schlüssel SK1, insbesondere als one-time-key, mittels eines Zufallstokens erzeugt. Es wird dann im siebzehnten Schritt S17 die entsprechende Geräte-Onboarding-Antwort von der weiteren elektronischen Recheneinrichtung 42 an die elektronische Recheneinrichtung 40 übermittelt. Die elektronische Recheneinrichtung 40 überprüft die Korrektheit des Geräts 38 und erzeugt einen Session-Key SK2. Die erste Geräte-Onboarding-Antwort wird mit SK1 integritäts- und vertraulichkeitsgeschützt Die erste Geräte-Onboarding-Antwort wird mittels des Schlüssel SK1 geschützt. In einem achtzehnten Schritt S18 wird dann wiederum die zweite Geräte-Onboarding-Antwort von der elektronischen Recheneinrichtung 40 an der Gerät 38 übermittelt. Das Gerät 38 entschlüsselt die zweite Geräte-Onboarding-Antwort mit dem Einmalschlüssel SK1, insbesondere als one-time-key, und führt eine Integritätsprüfung durch. Der Schlüssel SK1 sowie das Zufallstoken werden nach einer positiven Überprüfung gelöscht. Das Gerät 38 akzeptiert den Schlüssel SK2. In einem neunzehnten Schritt S19 wird dann wiederum ein sicherer Kanal auf Basis des SK2 zwischen dem Gerät 38 und der elektronischen Recheneinrichtung 40 aufgebaut.

Gemäß der Ausgestaltungsform nach FIG 4 sind insbesondere in der Geräte-Onboarding-Anfrage die Geräteidentifikation und die Software-Version, insbesondere beide mit dem Onboarding-Schlüssel integritätsgeschützt, sowie dem Zufallstoken, insbesondere mit dem Onboarding-Schlüssel vertraulichkeits- und optional integritätsgeschützt. Die Domain-Registrar-Onboarding-Anfrage ist mit der Schlüsselanfrage und der Geräte-Onboarding-Anfrage integritäts- und vertraulichkeitsgeschützt. Die ersten Geräte-Onboarding-Antwort von der weiteren elektronischen Recheneinrichtung 42 mit SK1 und der bestätigten Geräteidentifikation sind integritäts- und vertraulichkeitsgeschützt.

## Patentansprüche

1. Verfahren zum Durchführen eines Geräte-Onboarding-Prozesses geschützt auf Basis symmetrischer Kryptographie bei einem Gerät (38) mittels eines Onboarding-Systems (36), mit den Schritten:
- Bereitstellen des Geräts (38) mit einem symmetrischen geräteindividuellen Onboarding-Schlüssel;
- Empfangen einer mit dem Onboarding-Schlüssel geschützten Onboarding-Anfrage des Geräts (38) mittels einer elektronischen Recheneinrichtung (40) des Onboarding-Systems (36), wobei die elektronische Recheneinrichtung (40) einem Nutzer zugeordnet ist, bei welchem das Gerät (38) angemeldet werden soll;
- Übermitteln der Onboarding-Anfrage von der elektronischen Recheneinrichtung (40) an eine weitere elektronische Recheneinrichtung (42) des Onboarding-Systems (36) mittels der elektronischen Recheneinrichtung (40), wobei die weitere elektronische Recheneinrichtung (42) einem Onboarding-Dienstleister für das Gerät (38) zugeordnet ist;
- Verifizieren des Geräts (38) auf Basis der übermittelten Onboarding-Anfrage mittels der weiteren elektronischen Recheneinrichtung (42);
- Erzeugen einer Onboarding-Antwort in Abhängigkeit von der Verifizierung und Übertragen der Onboarding-Antwort an die elektronische Recheneinrichtung (40) mittels der weiteren elektronischen Recheneinrichtung (42); und
- Durchführen des Geräte-Onboarding-Prozesses auf Basis der Onboarding-Antwort, wobei zwischen der elektronischen Recheneinrichtung (40) und dem Gerät (38) ein geschützter Kommunikationskanal auf Basis eines symmetrischen Geheimnisses aufgebaut wird.

2. Verfahren nach Anspruch 1, **dadurch gekennzeichnet, dass** als Onboarding-Schlüssel ein einzigartiges Gerätegeheimnis (22) bereitgestellt wird.

3. Verfahren nach Anspruch 1 oder 2, **dadurch gekennzeichnet, dass**
als Onboarding-Schlüssel eine zusammengesetzte Geräteerkennung (26) bereitgestellt wird.

4. Verfahren nach Anspruch 3, **dadurch gekennzeichnet, dass** die zusammengesetzte Geräteerkennung (26) in einer definierten Boot-Stage des Geräts (38) bereitgestellt wird.

5. Verfahren nach einem der vorhergehenden Ansprüche, **dadurch gekennzeichnet, dass**
zusätzlich mittels des Onboarding-Dienstleisters eine Softwareverifizierung für das Gerät (38) durchgeführt wird.

6. Verfahren nach einem der vorhergehenden Ansprüche, **dadurch gekennzeichnet, dass**
die Onboarding-Anfrage integritätsgeschützt und vertraulich von dem Gerät (38) an die elektronische Recheneinrichtung (40) übertragen wird.

7. Verfahren nach einem der vorhergehenden Ansprüche, **dadurch gekennzeichnet, dass**
die Onboarding-Anfrage mit einem Zufallstoken versehen wird.

8. Verfahren nach einem der vorhergehenden Ansprüche, **dadurch gekennzeichnet, dass**
beim Weiterleiten der Onboarding-Anfrage von der elektronischen Recheneinrichtung (40) zu der weiteren elektronischen Recheneinrichtung (42) ein sicherer Kanal aufgebaut wird.

9. Verfahren nach Anspruch 8, **dadurch gekennzeichnet, dass** der sichere Kanal mittels eines asymmetrischen Verschlüsselungsverfahrens aufgebaut wird.

10. Verfahren nach einem der vorhergehenden Ansprüche,
**dadurch gekennzeichnet, dass**
die Onboarding-Antwort zusätzlich mittels einer Signatur des Onboarding-Dienstleisters geschützt wird.

11. Verfahren nach einem der vorhergehenden Ansprüche,
**dadurch gekennzeichnet, dass**
die Onboarding-Antwort für das Gerät mittels eines Einmalschlüssels mittels der elektronischen Recheneinrichtung geschützt wird.

12. Verfahren nach Anspruch 11, **dadurch gekennzeichnet, dass** die Onboarding-Anfrage in Abhängigkeit von einem Konfigurationsparameter des Onboarding-Dienstleisters bearbeitet wird und der Einmalschlüssel zufällig erzeugt wird oder über eine Schlüsselableitungsfunktion in Abhängigkeit von einem Konfigurationsparameter der Onboarding-Anfrage des Gerätes durch den Onboarding-Dienstleister erzeugt wird.

13. Computerprogrammprodukt mit Programmcodemitteln, welche eine elektronische Recheneinrichtung (40, 42) dazu veranlassen, wenn die Programmcodemittel von der elektronischen Recheneinrichtung (40, 42) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Onboarding-System (36) zum Durchführen eines Geräte-Onboarding-Prozesses geschützt auf Basis symmetrischer Kryptographie bei einem Gerät (38), mit zumindest einer elektronischen Recheneinrichtung (40) und einer weiteren elektronischen Recheneinrichtung (42), wobei das Onboarding-System (36) zum Durchführen eines Verfahrens nach einem der Ansprüche 1 bis 12 ausgebildet ist.
